(19) Europäisches Patentamt
European Patent Office
Office européen des brevets

(11) **EP 4 270 749 A1**

(12) **EUROPEAN PATENT APPLICATION**
published in accordance with Art. 153(4) EPC

(43) Date of publication:
**01.11.2023  Bulletin 2023/44**

(21) Application number: **21935835.5**

(22) Date of filing: **25.11.2021**

(51) International Patent Classification (IPC):
**H02M 1/08** (2006.01)

(86) International application number:
**PCT/CN2021/133007**

(87) International publication number:
**WO 2022/213618 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.04.2021  CN 202110370310**

(71) Applicant: **China Faw Co., Ltd.**
**Changchun, Jilin 130011 (CN)**

(72) Inventors:
• **CHEN, Xiaojiao**
**Changchun, Jilin 130011 (CN)**
• **WANG, Sibo**
**Changchun, Jilin 130011 (CN)**
• **WANG, Lijun**
**Changchun, Jilin 130011 (CN)**

• **YU, Changhong**
**Changchun, Jilin 130011 (CN)**
• **LI, Shuai**
**Changchun, Jilin 130011 (CN)**
• **LI, Yan**
**Changchun, Jilin 130011 (CN)**
• **LI, Zhibing**
**Changchun, Jilin 130011 (CN)**
• **LIU, Yachuan**
**Changchun, Jilin 130011 (CN)**
• **SHI, Haohao**
**Changchun, Jilin 130011 (CN)**
• **JIA, Qi**
**Changchun, Jilin 130011 (CN)**

(74) Representative: **Penza, Giancarlo**
**Bugnion S.p.A.**
**Viale Lancetti, 17**
**20158 Milano (IT)**

(54) **PWM METHOD FOR SUPPRESSING NARROW PULSES**

(57)    The present invention provided a pulse width modulation (PWM) method for suppressing narrow pulses. The method involves an interval confirmation module, a special state processing module, and a duty cycle output calculation module, including: dividing a duty cycle into multiple interval segments to suppress narrow pulses signal based on a system configure requirement and a system parameter, in an electric motor control system, inputting a duty cycle setting value obtained through a vector control calculation into the interval confirmation module; calculating an actual output duty cycle setting values of upper and lower bridge arms of an insulated gate bipolar transistor (IGBT) through the special state processing module, and outputting the actual output duty cycle setting values of upper and lower bridge arms of an IGBT to a driving module as an IGBT switching operation instruction; outputting an actual output duty cycle of the bridge arm of the IGBT in different forms on the basis of an interval where the actual output duty cycle is positioned based on an interval division result and a special interval result to obtain the duty cycle outputs of different intervals for driving an IGBT module to be switched on or off. Based on the present invention, the duty cycle of a narrow pulse bandwidth is eliminated, a switching loss of the IGBT is reduced, a service life is prolonged, and efficiency is improved without increasing a hardware cost.

Set duty cycle → Interval Confirmation module → Special state processing module → Duty cycle output calculation module → Output duty cycle

Fig. 1

## Description

## Technical Field

The present invention relates to a narrow pulse filtering method of an electric motor controller, in particular to a pulse width modulation (PWM) method for suppressing narrow pulses.

## Background

In an electric drive system, it is of vital importance to reduce a switching loss, prolong a service life, and improve working reliability of an insulated gate bipolar transistor (IGBT) module, a predominant power output unit and core component of an electric motor controller. In an IGBT switching control process, a narrow pulse bandwidth has to be eliminated by virtue of a control technology, in order to prevent an invalid narrow pulse duty cycle from driving the IGBT to be switched on or off as well as reduce an IGBT loss and a connection risk.

## Summary

An objective of the present invention is to provide a method for controlling software. Accordingly, a duty cycle of a narrow pulse bandwidth is eliminated, a switching loss of an insulated gate bipolar transistor (IGBT) is reduced, a service life is prolonged, and efficiency is improved without increasing a hardware cost to solve the problems mentioned in the related art.

In order to realize the above objective, the present invention provides the technical solution as follows: a pulse width modulation (PWM) method for suppressing narrow pulses. The method includes an interval confirmation module, a special state processing module, and a duty cycle output calculation module, comprises: setting a narrow pulse time $D_L$ and a dead time $D_d$ in a duty cycle output based on a system configure requirement and a system parameter, dividing a duty cycle into multiple interval segments to suppress narrow pulses signal based on a relation between a duty cycle $D_m$ and the narrow pulse time $D_L$ and a relation between a duty cycle $D_m$ and the dead time $D_d$, a duty cycle into multiple interval segments to suppress a narrow pulse signal, in an electric motor control system, inputting a set duty cycle setting value $D_m$ obtained through the vector control calculation into the interval confirmation module; identifying a dead time loss state from a special jump state through the special state processing module, inputting a finally-determined division value and a special jump state value into the duty cycle calculation module to calculate an actual output duty cycle setting values of upper and lower bridge arms of an IGBT, and outputting the actual output duty cycle setting values of upper and lower bridge arms of an IGBT to a driving module as an IGBT switching operation instruction; and outputting an actual output duty cycle of the bridge arm of the IGBT in different forms on the basis of an interval where the actual output duty cycle is positioned based on an interval division result and a special interval result to obtain the duty cycle outputs of different intervals for driving an IGBT module to be switched on or off.

Preferably, based on a system design, $D_L < D_d$; and the duty cycle is divided into 7 interval segments based on the relation between the duty cycle $D_m$ and the narrow pulse time $D_L$ and a relation between a duty cycle $D_m$ and the dead time $D_d$, in the electric motor control system, inputting the duty cycle setting value $D_m$ obtained through the vector control calculation into the interval confirmation module, so as to determine an interval value, where an interval division form of set duty cycle setting value $D_m$ is as follows:

a determination condition of a first interval $Z_0$ is

$$0 \leq D_m \leq \frac{D_l}{2} \;;$$

a determination condition of a second interval $Z_1$ is

$$\frac{D_l}{2} \leq D_m \leq D_d \;;$$

a determination condition of a third interval $Z_2$ is $D_d \leq D_m \leq D_d + D_l$;

a determination condition of a fourth interval $Z_3$ is $D_d + D_l \leq D_m \leq 1 - D_d - D_l$;

a determination condition of a fifth interval $Z_4$ is $1 - D_d - D_l \leq D_m \leq 1 - D_d$;;

a determination condition of a sixth interval $Z_5$ is

$$1 - D_d \leq D_m \leq 1 - \frac{D_l}{2} \;;$$

a determination condition of a seventh interval $Z_6$ is

$$1 - \frac{D_l}{2} \leq D_m \leq 1 \;.$$

Preferably, in the special state processing module, adding a dead time setting for a non-dead state occurring in a continuous state process, and determining the non-dead state as a special interval.

Preferably, outputting the actual output duty cycle of the bridge arm of the IGBT in different forms on the basis of the interval where the actual output duty cycle is positioned based on the interval division result and the special interval result to obtain the duty cycle outputs of different intervals as follows for driving the IGBT module to be switched on or off:

interval $Z_0$: an actual output duty cycle value of the upper bridge arm of the IGBT is $D_t = 0$, and a duty cycle output of the lower bridge arm is $D_b = 1$;

interval $Z_1$: an actual output duty cycle value of the upper bridge arm of the IGBT is $D_t = 0$, and a duty cycle output of the lower bridge arm is $D_b = 1 - 2D_m$,

interval $Z_2$: an actual output duty cycle value of the upper bridge arm of the IGBT is $D_t = 0$, and a duty cycle output of the lower bridge arm is $D_b = 1 - 2D_m$,

interval $Z_3$: an actual output duty cycle value of the upper bridge arm of the IGBT is $D_t = 0$, and a duty cycle output of the lower bridge arm is $D_b = 1 - D_m - D_d$;

interval $Z_4$: an actual output duty cycle value of the upper bridge arm of the IGBT is $D_t = D_m - D_d$, and a duty cycle output of the lower bridge arm is $D_b = 1 - D_m - D_d$;

interval $Z_5$: an actual output duty cycle value of the upper bridge arm of the IGBT is $D_t = D_m - D_d$, and a duty cycle output of the lower bridge arm is $D_b = 0$;

interval $Z_6$: an actual output duty cycle value of the upper bridge arm of the IGBT is $D_t = 1$, and a duty cycle output of the lower bridge arm is $D_b = 0$;

a special state: an actual output duty cycle value of the upper bridge arm of the IGBT is $D_t = 0$, and a duty cycle output of the lower bridge arm is $D_b = 1 - 2D_m - D_d$.

Compared with the related art, the present invention has the beneficial effects as follows: the present invention provides the method for controlling software, by which the duty cycle of the narrow pulse bandwidth is eliminated, the switching loss of the IGBT is reduced, the service life is prolonged, and the efficiency is improved without increasing the hardware cost.

**Brief Description of the Drawings**

Fig. 1 is a schematic block diagram of a narrow pulse suppression system;

Fig. 2 is a schematic diagram of a solution for suppressing a narrow pulse;

Fig. 3 is a schematic diagram of an example of a special interval;

Fig. 4 is a schematic diagram of a Z0 interval output;

Fig. 5 is a schematic diagram of a Z1 interval output;

Fig. 6 is a schematic diagram of a Z2 interval output;

Fig. 7 is a schematic diagram of a Z3 interval output;

Fig. 8 is a schematic diagram of a Z4 interval output;

Fig. 9 is a schematic diagram of a Z5 interval output;

Fig. 10 is a schematic diagram of a Z6 interval output;

Fig. 11 is a schematic diagram of a special state output.

**Detailed Description**

The technical solutions in the examples of the present invention are clearly and completely described below with reference to the accompanying drawings in the examples of the present invention. Apparently, the described examples are some examples rather than all examples of the present invention. Based on the examples of the present invention, all other examples derived by those of ordinary skill in the art without making creative efforts fall within the scope of protection of the present invention.

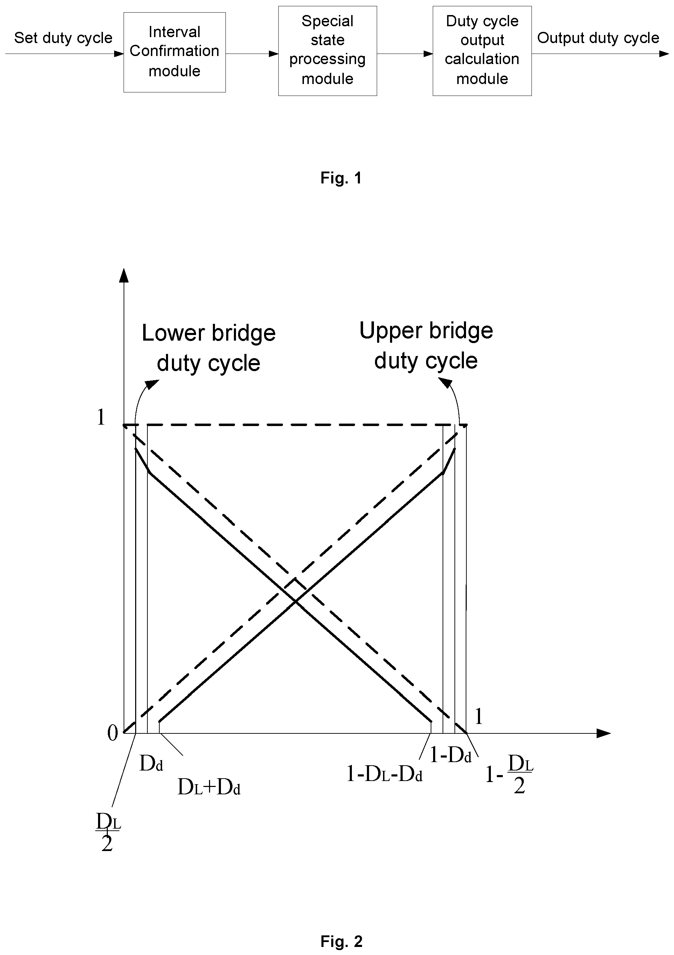

The present invention provides a technical solution as follows: a pulse width modulation (PWM) method for suppressing a narrow pulse. The method involves an interval confirmation module, a special state processing module, and a duty cycle output calculation module. As shown in Fig. 1, the method includes: a narrow pulse time $D_L$ and a dead time $D_d$ in a duty cycle output are set based on a system design requirement and a system parameter, a duty cycle is divided into multiple interval segments to suppress a narrow pulse signal based on a relation between a duty cycle $D_m$ and the narrow pulse time $D_L$ and a relation between a duty cycle Dm and the dead time $D_d$, and in an electric motor control system, a set duty cycle $D_m$ obtained through a vector control calculation is input into the interval confirmation module; a dead time loss state is identified from a special jump state through the special state processing module, a finally-determined interval division value and a special jump state value are input into the duty cycle calculation module to calculate actual output duty cycles of upper and lower bridge arms of an insulated gate bipolar transistor (IGBT), and the actual output duty cycles are output to a driving module as an IGBT switching operation instruction; and an actual output duty cycle of the bridge arm of the IGBT is output in different forms on the basis of an interval where the actual output duty cycle is positioned based on an interval division result and a special interval result to obtain duty cycle outputs of different intervals for driving an IGBT module to be switched on or off.

Further, based on a system design, $D_L < D_d$. The duty cycle is divided into 7 interval segments based on the relation between the duty cycle $D_m$ and the narrow pulse time $D_L$ and the relation between a duty cycle Dm and the dead time $D_d$, and a voltage utilization rate is improved to a maximum extent, thereby realizing a duty cycle output effect shown in Fig. 2. In the electric motor control system, the set duty cycle $D_m$ obtained through the vector control calculation is input into the interval confirmation module to determine an interval value, where an interval division form of the set duty cycle $D_m$ is as follows:

a determination condition of a first interval $Z_0$ is

$$0 \leq D_m \leq \frac{D_l}{2} \text{ ;}$$

a determination condition of a second interval $Z_1$ is

$$\frac{D_l}{2} \leq D_m \leq D_d \text{ ;}$$

a determination condition of a third interval $Z_2$ is $D_d \leq D_m \leq D_d + D_l$;

a determination condition of a fourth interval $Z_3$ is $D_d + D_l \leq D_m \leq 1 - D_d - D_l$;

a determination condition of a fifth interval $Z_4$ is $1 - D_d - D_l \leq D_m \leq 1 - D_d$;

a determination condition of a sixth interval $Z_5$ is

$$1 - D_d \leq D_m \leq 1 - \frac{D_l}{2} \text{ ;}$$

a determination condition of a seventh interval $Z_6$ is

$$1 - \frac{D_l}{2} \leq D_m \leq 1 \text{ .}$$

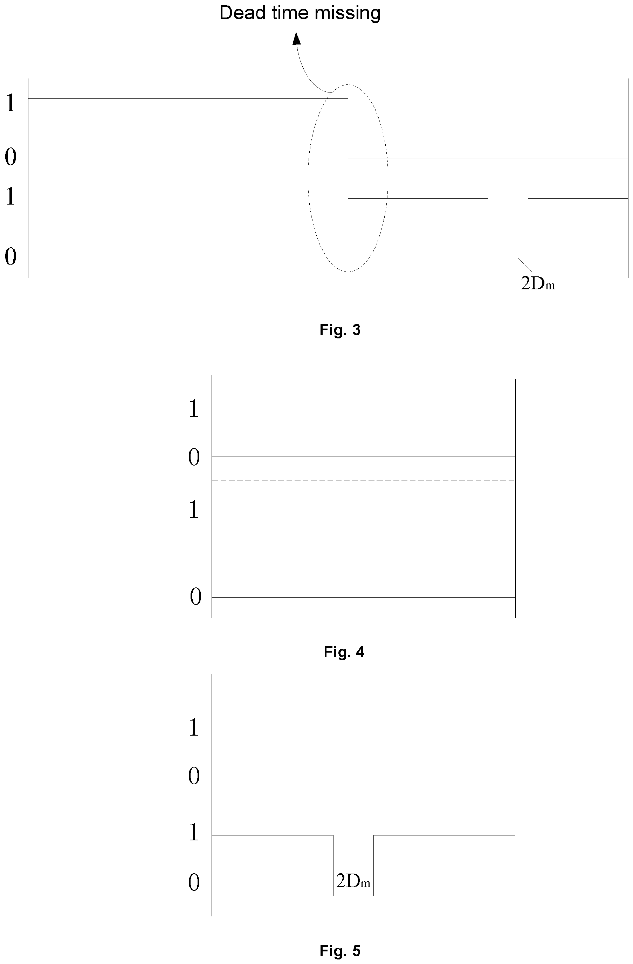

Further, in the special state processing module, a dead time setting is added for a non-dead state occurring in a continuous state process, as shown in Fig. 3, and the state is defined as a special interval.

Further, the actual output duty cycle of the bridge arm of the IGBT is output in different forms on the basis of the interval where the actual output duty cycle is positioned based on the interval division result and the special interval result to obtain the duty cycle outputs of different intervals as follows for driving the IGBT module to be switched on or off:

interval $Z_0$: an actual output duty cycle of the upper bridge arm of the IGBT is $D_t = 0$, and a duty cycle output of the lower bridge arm is $D_b = 1$, as shown in Fig. 4;

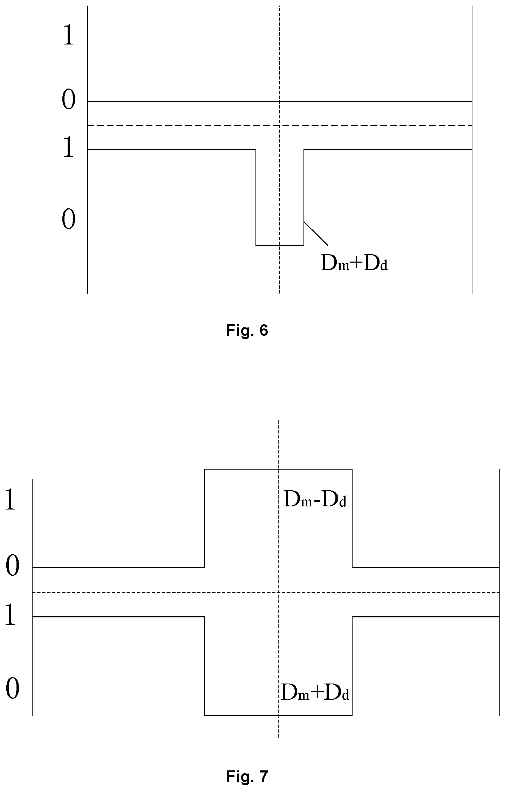

interval $Z_1$: an actual output duty cycle of the upper bridge arm of the IGBT is $D_t = 0$, and a duty cycle output of the lower bridge arm is $D_b = 1 - 2D_m$, as

shown in Fig. 5;

interval $Z_2$: an actual output duty cycle of the upper bridge arm of the IGBT is $D_t = 0$, and a duty cycle output of the lower bridge arm is $D_b = 1 - 2D_m$, as shown in Fig. 6;

interval $Z_3$: an actual output duty cycle of the upper bridge arm of the IGBT is $D_t = 0$, and a duty cycle output of the lower bridge arm is $D_b = 1 - D_m - D_d$, as shown in Fig. 7;

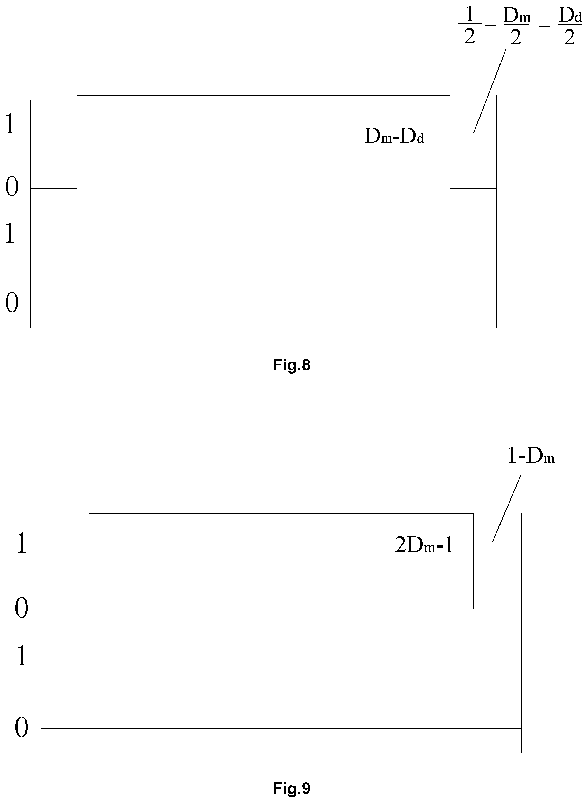

interval $Z_4$: an actual output duty cycle of the upper bridge arm of the IGBT is $D_t = D_m - D_d$, and a duty cycle output of the lower bridge arm is $D_b = 1 - D_m - D_d$, as shown in Fig. 8;

interval $Z_5$: an actual output duty cycle of the upper bridge arm of the IGBT is $D_t = D_m - D_d$, and a duty cycle output of the lower bridge arm is $D_b = 0$, as shown in Fig. 9;

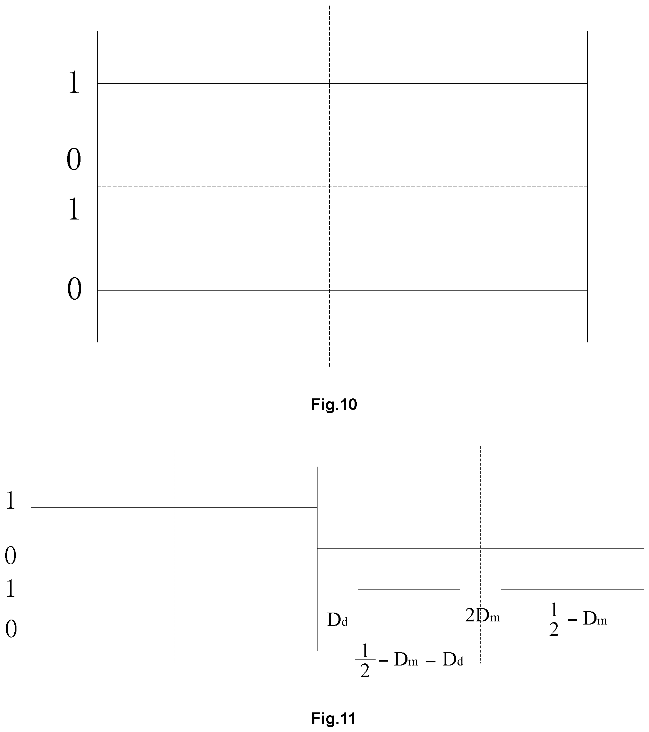

interval $Z_6$: an actual output duty cycle of the upper bridge arm of the IGBT is $D_t = 1$, and a duty cycle output of the lower bridge arm is $D_b = 0$, as shown in Fig. 10; and

a special state: an actual output duty cycle of the upper bridge arm of the IGBT is $D_t = 0$, and a duty cycle output of the lower bridge arm is $D_b = 1 - 2D_m - D_d$, as shown in Fig. 11.

While the examples of the present invention have been shown and described, it can be appreciated by those of ordinary skill in the art that various changes, modifications, substitutions, and variations can be made to these examples without departing from the principles and spirit of the present invention, and the scope of the present invention is defined by the appended claims and their equivalents.

**Claims**

1. A pulse width modulation (PWM) method for suppressing narrow pulses, comprising: an interval confirmation module, a special state processing module, and a duty cycle output calculation module, where the method comprises:

setting a narrow pulse time period $D_L$ and a dead time period $D_d$ in a duty cycle output based on a system configure requirement and a system parameter;
dividing a duty cycle into a plurality of interval segments to suppress narrow pulses signal based on a relation between a duty cycle $D_m$ and the narrow pulse time $D_L$ and a relation be-

tween the duty cycle $D_m$ and the dead time period $D_d$, in an electric motor control system, inputting a duty cycle setting value $D_m$ obtained through a vector control calculation into the interval confirmation module;

identifying a dead time loss state from a special jump state through the special state processing module;

inputting a finally-determined interval division value and a special jump state value into the duty cycle calculation module to calculate actual output duty cycle setting values of upper and lower bridge arms of an insulated gate bipolar transistor (IGBT) to output the actual output duty cycle setting values set as an IGBT switching operation instruction to a driving module; and

outputting an actual output duty cycle of the bridge arm of the IGBT in different forms on the basis of an interval where the actual output duty cycle is positioned based on an interval division result and a special interval result to obtain the duty cycle outputs of different intervals for driving an IGBT module to be switched on or off.

2. The PWM method for suppressing narrow pulses as claimed in claim 1, wherein for a system design $D_L < D_d$; and the duty cycle is divided into seven interval segments based on the relation between the duty cycle $D_m$ and the narrow pulse time period $D_L$ and the relation between the duty cycle $D_m$ and the dead time period $D_d$, in the electric motor control system, inputting the duty cycle setting value $D_m$ obtained through the vector control calculation into the interval confirmation module, to determine an interval value, and an interval division form of the duty cycle setting value $D_m$ is as follows:

a determination condition of a first interval $Z_0$ is

$$0 \leq D_m \leq \frac{D_l}{2} \;;$$

a determination condition of a second interval $Z_1$ is

$$\frac{D_l}{2} \leq D_m \leq D_d \;;$$

a determination condition of a third interval $Z_2$ is $D_d \leq D_m \leq D_d + D_l$;

a determination condition of a fourth interval $Z_3$ is $D_d + D_l \leq D_m \leq 1 - D_d - D_l$;

a determination condition of a fifth interval $Z_4$ is $1 - D_d - D_l \leq D_m \leq 1 - D_d$;

a determination condition of a sixth interval $Z_5$ is

$$1 - D_d \leq D_m \leq 1 - \frac{D_l}{2} \;;$$

a determination condition of a seventh interval $Z_6$ is

$$1 - \frac{D_l}{2} \leq D_m \leq 1 \;.$$

3. The PWM method for suppressing narrow pulses as claimed in claim 1, further comprising:

in the special state processing module, adding a dead time setting for a non-dead state occurring in a continuous state process; and determining the non-dead state as a special interval.

4. The PWM method for suppressing narrow pulses as claimed in claim 1 or 2, wherein the outputting the actual output duty cycle of the bridge arm of the IGBT in different forms on the basis of the interval where the actual output duty cycle is positioned based on the interval division result and the special interval result to obtain the duty cycle outputs of different intervals as follows for driving the IGBT module to be switched on or off:

interval $Z_0$: an actual output duty cycle value of the upper bridge arm of the IGBT is $D_t = 0$, and a duty cycle output of the lower bridge arm of the IGBT is $D_b = 1$;

interval $Z_1$: an actual output duty cycle value of the upper bridge arm of the IGBT is $D_t = 0$, and a duty cycle output of the lower bridge arm of the IGBT is $D_b = 1 - 2D_m$,

interval $Z_2$: an actual output duty cycle value of the upper bridge arm of the IGBT is $D_t = 0$, and a duty cycle output of the lower bridge arm of the IGBT is $D_b = 1 - 2D_m$,

interval $Z_3$: an actual output duty cycle value of the upper bridge arm of the IGBT is $D_t = 0$, and a duty cycle output of the lower bridge arm of the IGBT is $D_b = 1 - D_m - D_d$;

interval $Z_4$: an actual output duty cycle value of the upper bridge arm of the IGBT is $D_t = D_m - D_d$, and a duty cycle output of the lower bridge arm of the IGBT is $D_b = 1 - D_m - D_d$;

interval $Z_5$: an actual output duty cycle value of the upper bridge arm of the IGBT is $D_t = D_m - D_d$, and a duty cycle output of the lower bridge arm of the IGBT is $D_b = 0$;

interval $Z_6$: an actual output duty cycle value of the upper bridge arm of the IGBT is $D_t = 1$, and a duty cycle output of the lower bridge arm of the IGBT is $D_b = 0$;

a special state: an actual output duty cycle value of the upper bridge arm of the IGBT is $D_t = 0$, and a duty cycle output of the lower bridge arm of the IGBT is $D_b = 1 - 2D_m - D_d$.

Set duty cycle → | Interval Confirmation module | → | Special state processing module | → | Duty cycle output calculation module | → Output duty cycle

**Fig. 1**

Lower bridge duty cycle

Upper bridge duty cycle

1

0

$D_d$

$D_L+D_d$

$\dfrac{D_L}{2}$

$1-D_L-D_d$

$1-D_d$

$1-\dfrac{D_L}{2}$

1

**Fig. 2**

Dead time missing

Fig. 3

Fig. 4

Fig. 5

1

0

1

0

$D_m+D_d$

**Fig. 6**

1

0

1

0

$D_m-D_d$

$D_m+D_d$

**Fig. 7**

$$\frac{1}{2} - \frac{D_m}{2} - \frac{D_d}{2}$$

$D_m - D_d$

1

0

1

0

**Fig.8**

$1 - D_m$

$2D_m - 1$

1

0

1

0

**Fig.9**

1

0

1

0

**Fig.10**

1

0

1

0

$D_d$

$2D_m$

$\frac{1}{2} - D_m$

$\frac{1}{2} - D_m - D_d$

**Fig.11**

## INTERNATIONAL SEARCH REPORT

| International application No. |
| --- |
| **PCT/CN2021/133007** |

| A. | CLASSIFICATION OF SUBJECT MATTER |
| --- | --- |
| | H02M 1/08(2006.01)i |

According to International Patent Classification (IPC) or to both national classification and IPC

| B. | FIELDS SEARCHED |
| --- | --- |

Minimum documentation searched (classification system followed by classification symbols)
    H02M1/-

Documentation searched other than minimum documentation to the extent that such documents are included in the fields searched

Electronic data base consulted during the international search (name of data base and, where practicable, search terms used)
    WPABSC; CNABS; CNTXT; ENTXTC; DWPI; VEN; OETXT; CNKI: 电机, 逆变, 窄脉冲, 窄脉宽, 小脉冲, 小脉宽, 死区时间, 占空比, 抑制, 消除, 区间, 区域, 驱动, motor, invert, narrow pulse, little pulse, dead time, duty cycle, suppress, eliminate, interval, area, drive

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 113270996 A (CHINA FIRST AUTOMOBILE WORKS GROUP CO., LTD.) 17 August 2021 (2021-08-17)<br>        description, paragraphs 2-54, and figures 1-11 | 1-4 |
| X | CN 111478613 A (SHANGHAI CHINT POWER SYSTEMS CO., LTD.) 31 July 2020 (2020-07-31)<br>        description, paragraphs 2-48, and figures 1-5 | 1, 3 |
| A | CN 111478613 A (SHANGHAI CHINT POWER SYSTEMS CO., LTD.) 31 July 2020 (2020-07-31)<br>        description, paragraphs 2-48, and figures 1-5 | 2, 4 |
| X | CN 110323927 A (TBEA XI'AN ELECTRICAL TECHNOLOGY CO., LTD. et al.) 11 October 2019 (2019-10-11)<br>        description, paragraphs 2-43, and figures 1-5 | 1, 3 |
| A | CN 110323927 A (TBEA XI'AN ELECTRICAL TECHNOLOGY CO., LTD. et al.) 11 October 2019 (2019-10-11)<br>        description, paragraphs 2-43, and figures 1-5 | 2, 4 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 January 2022** | **15 February 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/133007** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 105305799 A (SICHUAN CHANGHONG ELECTRIC CO., LTD.) 03 February 2016 (2016-02-03) description, paragraphs 2-22, and figures 1-2 | 1-4 |
| A | JP 2005094944 A (MATSUSHITA ELECTRIC IND. CO., LTD.) 07 April 2005 (2005-04-07) entire document | 1-4 |
| A | CN 110557040 A (WUT EPOWER CO., LTD.) 10 December 2019 (2019-12-10) entire document | 1-4 |

Form PCT/ISA/210 (second sheet) (January 2015)

**INTERNATIONAL SEARCH REPORT**
**Information on patent family members**

International application No.

**PCT/CN2021/133007**

| Patent document cited in search report | | | Publication date (day/month/year) | Patent family member(s) | | | Publication date (day/month/year) |
|---|---|---|---|---|---|---|---|
| CN | 113270996 | A | 17 August 2021 | None | | | |
| CN | 111478613 | A | 31 July 2020 | None | | | |
| CN | 110323927 | A | 11 October 2019 | None | | | |
| CN | 105305799 | A | 03 February 2016 | None | | | |
| JP | 2005094944 | A | 07 April 2005 | None | | | |
| CN | 110557040 | A | 10 December 2019 | CN | 110557040 | B | 06 July 2021 |

Form PCT/ISA/210 (patent family annex) (January 2015)